# EUROPÄISCHE PATENTSCHRIFT

(11) **EP 3 298 376 B1**
(45) Veröffentlichungstag und Bekanntmachung des Hinweises auf die Patenterteilung: **24.07.2019**
(21) Anmeldenummer: 16728845.5
(22) Anmeldetag: 20.05.2016
(51) Int. Cl.: G01M 1/02, B23K 11/31, G01M 1/32

(54) **VORRICHTUNG ZUM BEFESTIGEN EINES AUSGLEICHSGEWICHTS AN EINER WELLE**
APPARATUS FOR FASTENING A BALANCING WEIGHT TO A SHAFT
DISPOSITIF PERMETTANT DE FIXER UN POIDS DE COMPENSATION SUR UN ARBRE

(30) Priorität: 22.05.2015 DE 102015108146
(43) Veröffentlichungstag der Anmeldung: 28.03.2018
(73) Patentinhaber: Schenck RoTec GmbH, 64293 Darmstadt (DE)
(72) Erfinder: MUTH, Christian, 64405 Fischbachtal (DE); ROGALLA, Martin, 64297 Darmstadt (DE)
(74) Vertreter: Haarpatent Patentanwälte Krämer Meyer
(86) Internationale Anmeldenummer: PCT/EP2016/061455
(87) Internationale Veröffentlichungsnummer: WO 2016/188912

(56) Entgegenhaltungen:
- WO-A1-2004/005878
- JP-A- S57 137 080
- JP-A- 2005 169 507

## Beschreibung

Die Erfindung betrifft eine Vorrichtung für eine Wellenauswuchtmaschine zum Befestigen eines Ausgleichsgewichts an einer Welle mit einer eine obere und eine untere Zangeneinheit umfassenden zangenartigen Einrichtung, wobei jede Zangeneinheit als zweiarmiger Hebel ausgestaltet ist.

Wellenauswuchtmaschinen der eingangs genannten Art werden zur Auswuchtung von Rotoren, wie beispielsweise Gelenkwellen oder Kardanwellen, verwendet. Hierfür wird nach einer Messung der Unwucht ein Ausgleichsgewicht an der Welle mittels Schweißen oder Kleben angebracht. Um den Ausgleich der Unwucht zu kontrollieren, erfolgt nach dem Ausgleich in der Regel eine erneute Messung der Unwucht in Form einer Unwuchtkontrollmessung. Eine Korrelation zwischen der ersten Unwuchtmessung und der weiteren Unwuchtmessung kann jedoch nur hergestellt werden, wenn während des Ausgleichs und den Unwuchtmessungen keine externen Kräfte auf den Rotor oder die den Rotor spannenden Werkzeuge wirken. Solche Kräfte können dadurch entstehen, dass beispielsweise die Elektrode und Gegenelektrode zur Befestigung des Ausgleichsgewichts nicht genau gleichzeitig auf den Rotor treffen und sich die Stoßkräfte nicht gegenseitig aufheben, so dass eine Stoßkraft auf den Rotor wirkt.

Aus der EP 1 520 161 B1 ist eine Schweißvorrichtung zur Befestigung von Ausgleichsgewichten an Rotoren bekannt, die derart konstruiert ist, dass während der Anbringung der Ausgleichsgewichte abgesehen von hierfür benötigten Anpresskräften keine äußeren Kräfte den Rotor belasten. Bei der offenbarten Vorrichtung kann mithilfe einer längs einer Rotorachse positionierbaren zangenartigen Einrichtung ein Ausgleichsgewicht am Außenumfang des Rotors platziert und dort befestigt werden. Die zangenartige Einrichtung umfasst eine obere und eine untere schwimmend gelagerte Zangeneinheit, die beide mithilfe einer Vorschubeinheit zur Vergrößerung oder Verkleinerung ihres Abstands relativ zueinander bewegbar sind. Sobald die obere Zangeneinheit am Rotor anliegt, wird die untere Zangeneinheit ebenfalls mit dem Rotor in Kontakt gebracht, wobei zur Kompensation ihres Gewichts die zangenartige Einrichtung über eine pneumatische Zylindereinheit abgestützt ist. Ausgleichsgewichte können in Aufnahmen eingelegt werden, die an der unteren Zangeneinheit ausgebildet sind. Das Ausgleichsgewicht wird durch einen Schweißvorgang an der Welle befestigt. Die obere und untere Zangeneinheit dienen hierbei als Elektroden. Um eine korrekte beständige Anbringung des Ausgleichsgewichts sicherzustellen, muss eine von den Elektroden ausgehende Schweißkraft radial auf das Ausgleichsgewicht beziehungsweise auf die Welle wirken. Dies wird dadurch erreicht, dass die Zangeneinheiten über einen Linearantrieb an die Schweißstelle gefahren werden.

JP S57-137 080 A offenbart eine Schweißzange mit zwei Hebelarmen, die an ihrem freien Ende Schweißspitzen aufweisen. Die Hebelarme sind gelenkig an einem Grundkörper und an einem Hubzylinder befestigt. Durch Betätigung des Hubzylinders kann die Schweißzange geschlossen und die Schweißspitzen zur Anlage an dem zu schweißenden Werkstück gebracht werden.

Ferner offenbart DE 102 30 207 A1 eine Vorrichtung zum Befestigen von Ausgleichsgewichten an Gelenkwellen oder Kardanwellen, wobei die Vorrichtung zumindest eine längs der Rotorachse positionierbare zangenartige Einrichtung aufweist, mit der ein Ausgleichsgewicht am Außenumfang des Rotors platzierbar und dort befestigbar ist. Die zangenartige Einrichtung ist zur Aufnahme von mehreren Ausgleichsgewichten ausgebildet. Der Stand der Technik wird weiter noch durch folgendes Dokument wiedergegeben: JP2005169507 A.

Der Erfindung liegt die Aufgabe zugrunde, eine alternative Vorrichtung zur Anbringung von Ausgleichsgewichten bereitzustellen, mit der Ausgleichsgewichte an einer Welle angebracht werden können, ohne dass externe Kräfte auf die Welle wirken.

Die Aufgabe wird erfindungsgemäß durch eine Vorrichtung mit den in Anspruch 1 angegebenen Merkmalen gelöst. Vorteilhafte Ausgestaltungen der Vorrichtung sind in den Unteransprüchen angegeben.

Die Aufgabe wird erfindungsgemäß dadurch gelöst, dass eine Vorrichtung für eine Wellenauswuchtmaschine zum Befestigen eines Ausgleichsgewichts an einer Welle bereitgestellt wird mit einer eine obere und eine untere Zangeneinheit umfassenden zangenartigen Einrichtung, wobei jede Zangeneinheit als zweiarmiger Hebel ausgestaltet ist, der an einem Grundkörper um einen Hebeldrehpunkt drehbar gelagert ist und jede Zangeneinheit an einem ersten Hebelende ein Aufnahmeteil mit mindestens einer Aufnahme für ein Ausgleichsgewicht oder eine Welle aufweist, wobei die Hebel an ihren den Aufnahmen entgegengesetzten zweiten Hebelenden über einen Hubzylinder miteinander verbunden sind und jeweils ein Führungsstab an dem Aufnahmeteil jeder Zangeneinheit und dem Grundkörper angelenkt ist, so dass die Aufnahmen durch einen Hub des Hubzylinders zur radialen Anlage an der Welle bringbar sind, wobei der zweiarmige Hebel jeder Zangeneinheit derart ausgestaltet ist, dass die Gewichte der zwei Hebelarme beiderseits der Hebeldrehpunkte ausgeglichen sind, so dass eine gleichmäßige Gewichtsverteilung zwischen den ersten Hebelenden und den zweiten Hebelenden erreicht wird.

Die als zweiarmige Hebel ausgestalteten Zangeneinheiten weisen ein erstes und ein zweites Hebelende auf, wobei die Zangeneinheiten an ihren ersten Hebelenden jeweils ein Aufnahmeteil mit einer Aufnahme für eine Welle oder ein Ausgleichsgewicht aufweisen. Ferner ist jeweils ein Führungsstab an dem Aufnahmeteil einer Zangeneinheit und dem Grundkörper angelenkt. An ihren zweiten Hebelenden sind die Hebel mit einem Hubzylinder verbunden. Hierbei kann beispielsweise die erste obere Zangeneinheit an einem Kolben des Hubzylinders und die zweite untere Zangeneinheit an einem Zylinder des Hubzylinders befestigt sein. Der Hubzylinder kann als Pneumatikzylinder oder als Hydraulikzylinder ausgestaltet sein. Auch ein Hubzylinder mit zwei in einem Zylinder laufenden Kolben kann vorteilhaft sein. Konstruktiv vorteilhaft ist auch, wenn ein Elektromotor an den Hubzylinder angeschlossen ist und zur Generierung des Hubs verwendet wird.

Durch den Hub des Hubzylinders werden die den Aufnahmen entgegengesetzten Enden der Hebel in gegenläufige Richtung bewegt, so dass sich der Abstand der Aufnahmen verkleinert und die Aufnahmen gemeinsam zur Anlage an die Wellenoberfläche gebracht werden können. Das in einer der Aufnahmen befindliche Ausgleichsgewicht kann dann durch Kleben oder Schweißen an der Welle befestigt werden. Nach der Befestigung können die Aufnahmen durch einen Hub des Hubzylinders von der Welle weg bewegt werden, wobei sich hierbei der Abstand der zweiten Hebelenden verkleinert. Durch die Ausgestaltung der Zangeneinheiten als Hebelarme und die im Wesentlichen gleichzeitige Anlage der Aufnahmen an der Welle wird erreicht, dass bei der Anbringung des Ausgleichsgewichts keine oder so gut wie keine externen Kräfte auf die Welle ausgeübt werden und somit kein Gewichtsausgleich der Zangeneinheiten notwendig ist. Zudem sind die Zangeneinheiten derart konstruiert, dass die Gewichte der Hebelarme beiderseits der Hebeldrehpunkte ausgeglichen sind. Die Notwendigkeit eines Pneumatikzylinders für den Gewichtsausgleich der zangenartigen Einrichtung entfällt somit. Es wird eine konstruktiv einfache Vorrichtung zur Anbringung von Ausgleichsgewichten bereitgestellt, die günstig herzustellen und leicht zu warten ist.

Besonders vorteilhaft ist es, wenn jeweils ein Aufnahmeteil über einen Lagerpunkt an einer der Zangeneinheiten beweglich gelagert ist, wobei insbesondere ein oberes Aufnahmeteil über einen Lagerpunkt an der oberen Zangeneinheit und ein unteres Aufnahmeteil über einen Lagerpunkt an der unteren Zangeneinheit drehbar gelagert ist. Die Lagerung kann beispielsweise über Befestigungselemente wie Bolzen erfolgen.

Damit die Aufnahmeteile mit den Aufnahmen radial an der Welle zur Anlage gebracht werden können, sind an den Aufnahmeteilen Führungsstäbe befestigt, die zudem an dem Grundkörper befestigt sind. Es wird vorgeschlagen, dass jeder Führungsstab mit einem ersten Ende über einen Anlenkpunkt an dem Grundkörper und mit einem zweiten Ende über einen Anlenkpunkt an dem Aufnahmeteil einer Zangeneinheit angelenkt ist, so dass die Vorrichtung vorteilhafterweise mindestens zwei Führungsstäbe umfasst. Die Führungsstäbe können in einer Ausgestaltung derart konstruiert sein, dass deren Anlenkpunkte an dem Grundkörper in einer von den Hebeldrehpunkten gebildeten Ebene, insbesondere einer vertikalen Ebene liegen. Vorteilhaft ist zudem, wenn jeweils ein Lagerpunkt, ein Hebeldrehpunkt und jeweils zwei Anlenkpunkte derart angeordnet sind, dass sie die Eckpunkte eines Parallelogramms bilden. Die obere Zangeneinheit kann zu der unteren Zangeneinheit symmetrisch ausgebildet sein, wobei jede Zangeneinheit mit dem jeweiligen Führungsstab ein Parallelogramm bilden kann, dessen Ecken jeweils von einem Lagerpunkt, einem Hebeldrehpunkt und zwei Anlenkpunkten definiert werden. Bei dem so geformten Parallelogramm ist insbesondere die Länge eines über die Anlenkpunkte festgelegten Führungsstabes gleich der Länge eines ersten Hebelendes einer Zangeneinheit, das zwischen einem Hebeldrehpunkt und einem Lagerpunkt angelenkt ist. Zudem kann eine aus jeweils einem Anlenkpunkt eines Führungsstabes und einem Lagerpunkt gebildete Ebene parallel zu einer von den Hebeldrehpunkten der Zangeneinheiten gebildeten Ebene angeordnet sein. Es kann jedoch auch vorteilhaft sein, dass jeweils ein Lagerpunkt, ein Hebeldrehpunkt und jeweils zwei Anlenkpunkte derart angeordnet sind, dass sie nicht die Eckpunkte eines Parallelogramms bilden, wobei insbesondere jeweils eine Zangeneinheit mit dem jeweiligen Führungsstab als viergliedriges Kurbelgetriebe ausgebildet ist, dessen Gelenkpunkte von den jeweiligen Anlenkpunkten, Lagerpunkten und Hebeldrehpunkten gebildet wird. Hierbei ist insbesondere die Länge eines über die Anlenkpunkte festgelegten Führungsstabes ungleich der Länge eines ersten Hebelendes einer Zangeneinheit zwischen einem Hebeldrehpunkt und einem Lagerpunkt. Ein Vorteil einer solchen Ausgestaltung ist, dass die Aufnahmen auch in einer von der vertikalen Ebene abweichenden Orientierung radial zur Anlage an der Welle gebracht werden können, wodurch beim Schweißen gegebenenfalls auftretende Nebenschlussströme verhindert werden, die entstehen, wenn das Ausgleichsgewicht nicht genau tangential auf die Wellenoberfläche gedrückt wird.

Es ist nach der Erfindung vorgesehen, dass die Zangeneinheiten in offene, in einer Ebene mit einer Wellenachse liegenden Endanschlagspositionen verschiebbar sind. Der Vorteil einer Endanschlagsposition ist, dass hierdurch die Zangeneinheiten in Gleichlage in Bezug auf die Wellenachse gebracht werden können. In der Endanschlagsposition liegen die Aufnahmen der Zangeneinheiten insbesondere parallel und in einem gleichen Abstand zur Wellenachse. Mithilfe einer solchen Synchronisierung der Bewegungen der oberen und unteren Zangeneinheit kann sichergestellt werden, dass die Aufnahmen gleichzeitig an dem Wellenumfang anliegen, wenn die Zangeneinheiten von der offenen, in der Endanschlagsposition vorliegenden Position in die geschlossene, an der Welle anliegenden Position gebracht werden.

Vorteilhafterweise ist die Aufnahme für das Ausgleichsgewicht oder die Welle konkav gekrümmt ausgestaltet. Dadurch, dass die Form der Aufnahmen sowie vorteilhafterweise auch die Form des Ausgleichsgewichts an den Wellenumfang angepasst sind, ist eine deutlich verbesserte Anlage des Ausgleichsgewichts an der Welle erreichbar, was wiederum zu einem verbesserten Drehverhalten der Welle führt.

Um die Vorrichtung entlang der auszuwuchtenden Welle und zu einem Ausgleichsort hin zu bewegen, wird vorgeschlagen, dass der Grundkörper einen ersten Führungsschlitten umfasst, so dass die Vorrichtung in Wellenlängsrichtung verschiebbar ist, das heißt, die Vorrichtung kann parallel zur Wellenachse verschoben werden. Der Führungsschlitten kann auf einer parallel zu einer in der Wellenauswuchtmaschine eingespannten Welle verlaufenden Führungsschiene verfahrbar sein. Nachdem die Vorrichtung zu dem Ausgleichsort hin bewegt wurde, kann sie mithilfe einer am Führungsschlitten vorliegenden Arretierungsvorrichtung in ihrer Position arretiert werden.

Um eine einfache Einbringung einer unwuchtbehafteten Welle in die Wellenauswuchtmaschine zu ermöglichen, kann es ferner vorteilhaft sein, dass der Grundkörper einen weiteren Führungsschlitten umfasst, so dass die Vorrichtung quer zur Wellenachse verschiebbar ist. Die Vorrichtung kann von ihrer Position auf eine versetzt angeordnete Position, zum Beispiel auf eine weitere Führungsschiene, verfahren werden, so dass die Welle zugänglich ist und in die Wellenauswuchtmaschine eingebracht oder aus dieser entnommen werden kann.

Es ist vorgesehen, dass das Aufnahmeteil mehrere Aufnahmen für Ausgleichsgewichte umfasst. Die Aufnahmen für Ausgleichsgewichte können an einer geeigneten Beladestation mit Ausgleichsgewichten bestückt werden. Dies kann mittels einer automatischen Bestückungseinrichtung oder manuell erfolgen. Dadurch, dass das Aufnahmeteil mehrere Aufnahmen umfasst, die mit Ausgleichsgewichten bestückbar sind, wird ein eventuell zweiter ergänzender Ausgleichsvorgang ermöglicht, ohne zwischenzeitlich die Aufnahme erneut bestücken zu müssen.

In einer bevorzugten Ausgestaltung der Erfindung sind die Aufnahmen auswechselbar an den Aufnahmeteilen befestigt. Hierdurch wird die Anbringung von unterschiedlichen Ausgleichsgewichtsformen ermöglicht.

Ein Ausgleichsgewicht kann durch Kleben oder Schweißen an der Welle angebracht werden. Um das Ausgleichsgewicht anzuschweißen, ist es bevorzugt, dass die zangenartige Einrichtung als Schweißvorrichtung und die Aufnahmen als Elektroden ausgebildet sind. Es können Punkt- oder Buckelschweißverfahren zum Einsatz kommen. Da als Ausgleichsgewichte nicht nur Stahl-, sondern auch Aluminiummaterialien zum Einsatz kommen können, können auch materialspezifische Schweißverfahren wie das MIG- oder WIG-Schweißverfahren verwendet werden.

Die Erfindung wird nachfolgend anhand von Ausführungsbeispielen der Erfindung näher erläutert, die in der Zeichnung dargestellt sind. Es zeigen
- Figur 1: eine perspektivische Ansicht einer bevorzugten Vorrichtung mit geöffneten Zangeneinheiten,
- Figur 2: eine Seitenansicht der Figur 1,
- Figur 3: eine Seitenansicht einer bevorzugten Vorrichtung mit geschlossenen Zangeneinheiten und
- Figur 4: eine schematische Darstellung einer bevorzugten Vorrichtung zur Anbringung von Ausgleichsgewichten.

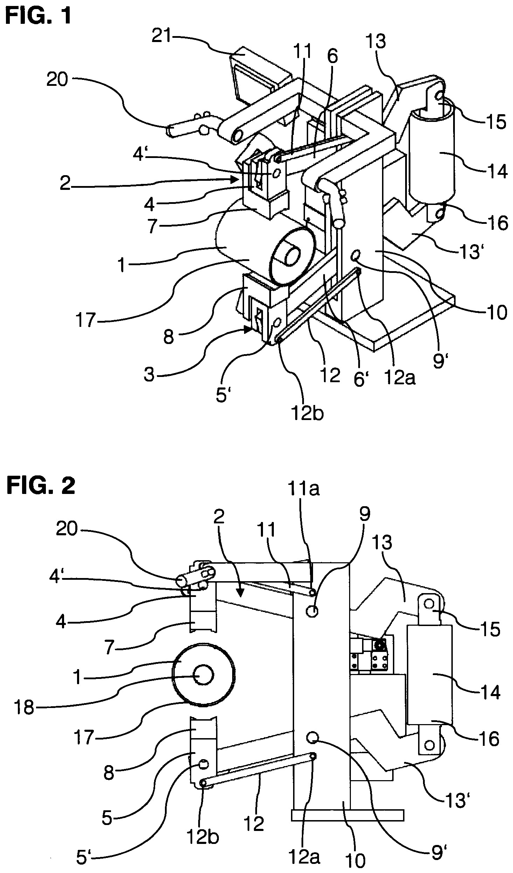

Die in den Figuren 1 bis 3 gezeigte Vorrichtung zur Anbringung eines Ausgleichsgewichts an einer Welle 1 umfasst eine obere Zangeneinheit 2 mit einem oberen Aufnahmeteil 4 und eine untere Zangeneinheit 3 mit einem unteren Aufnahmeteil 5. Die Aufnahmeteile 4, 5 sind an den ersten Hebelenden 6, 6' der Zangeneinheiten 2, 3 angeordnet. Ein oberes Aufnahmeteile 4 weist eine obere Aufnahme 7 und ein unteres Aufnahmeteil 5 eine untere Aufnahme 8 auf, wobei jeweils eine Aufnahme 7, 8 für die Aufnahme des Ausgleichsgewichts oder der Welle 1 vorgesehen ist. Die Aufnahmeteile 4, 5 können auch derart ausgestaltet sein, dass mehrere Aufnahmen für Ausgleichsgewichte befestigbar sind, wobei in den Figuren exemplarisch jeweils ein Aufnahmeteil 4, 5 mit lediglich einer Aufnahme 7, 8 dargestellt ist. Die Aufnahmeteile 4, 5 sind an den Hebelarmen drehbar gelagert, wobei das obere Aufnahmeteil 4 über einen Lagerpunkt 4' an der oberen Zangeneinheit 2 und das untere Aufnahmeteil 5 über einen Lagerpunkt 5' an der unteren Zangeneinheit 3 drehbar gelagert ist. Die Lagerpunkte 4', 5' der Aufnahmeteile 4, 5 an den Hebelarmen könnten beispielsweise als stiftartige Verbindungsmittel, Bolzen oder eine entsprechende Lagerung ausgebildet sein. Als Lagerpunkte 4', 5' werden im Sinne der Erfindung insbesondere die Mitten der drehbeweglichen Lagerungen angesehen.

Die Zangeneinheiten 2, 3 sind als zweiarmige Hebel ausgestaltet, die jeweils um einen Hebeldrehpunkt 9, 9' drehbar an einem Grundkörper 10 gelagert sind. Die Lagerung der Zangeneinheiten 2, 3 an dem Grundkörper 10 kann über bekannte Lagerungsmittel, wie beispielsweise Bolzen, erfolgen. Im Sinne der Erfindung bezeichnen die Hebeldrehpunkte 9, 9' insbesondere die Mitten der drehbeweglichen Lagerungen. An dem Grundkörper 10 sind ferner zwei Führungsstäbe 11, 12 befestigt. Hierbei ist der erste Führungsstab 11 mit seinem ersten Ende über einen Anlenkpunkt 11a an dem Grundkörper 10 und mit seinem zweiten Ende über einen Anlenkpunkt 11b an dem Aufnahmeteil 4 der oberen Zangeneinheit 2 drehbar gelagert. Der zweite Führungsstab 12 ist mit seinem ersten Ende über einen Anlenkpunkt 12a an dem Grundkörper 10 und mit seinem zweiten Ende über einen Anlenkpunkt 12b an dem Aufnahmeteil 5 der unteren Zangeneinheit 3 drehbar gelagert. Die Anlenkpunkte 11a, 12a der Führungsstäbe 11, 12 können an dem Grundkörper insbesondere in einer von den Hebeldrehpunkten 9, 9' gebildeten vertikalen Ebene liegen oder versetzt zu dieser angeordnet sein. Als Anlenkpunkte 11a, 12a, 11b, 12b werden im Sinne der Erfindung insbesondere die Mitten der drehbeweglichen Lagerungen angesehen.

Der Abstand zwischen dem Anlenkpunkt 11a und dem Hebeldrehpunkt 9 kann identisch zu dem Abstand zwischen dem Anlenkpunkt 11b und dem Lagerpunkt 4' sein. Gleiches gilt für den Abstand zwischen dem Anlenkpunkt 12a und dem Hebeldrehpunkt 9', der dem Abstand zwischen Lagerpunkt 5' und dem Anlenkpunkt 12b gleichen kann. Durch diese Positionierung der Führungsstäbe 11, 12 bilden jeweils ein Lagerpunkt 5', ein Hebeldrehpunkt 9' und zwei Anlenkpunkte 12a, 12b ein Parallelogramm und ein Lagerpunkt 4', ein Hebeldrehpunkt 9 und zwei Anlenkpunkte 11a, 11b ein weiteres Parallelogramm. Der Lagerpunkt 5', der Hebeldrehpunkt 9' und die zwei Anlenkpunkte 12a, 12b, beziehungsweise der Lagerpunkt 4', der Hebeldrehpunkt 9 und die zwei Anlenkpunkte 11a, 11b liegen auf den Ecken des jeweiligen Parallelogramms. Die so gebildeten Parallelogramme werden auch bei einer Bewegung der Zangeneinheiten 2, 3 beibehalten.

Ferner können auch die Führungsstäbe 11, 12 derart ausgelegt sein, dass der Abstand des Anlenkpunkts 11a zu dem Hebeldrehpunkt 9 identisch ist mit dem Abstand des Anlenkpunkts 12a zu dem Hebeldrehpunkt 9'. Diese Abstände können jedoch auch unterschiedlich ausgestaltet sein. Gleiches gilt für die Abstände der Anlenkpunkte 11b, 12b der Führungsstäbe zu den Lagerpunkten 4' und 5' der Aufnahmeteile 4, 5 an den Zangeneinheiten 2, 3. Bei dem so geformten Parallelogramm ist insbesondere die Länge eines über die Anlenkpunkte 11a, 11b, 12a, 12b festgelegten Führungsstabes 11, 12 gleich der Länge eines ersten Hebelendes 6, 6' einer Zangeneinheit 2, 3, das zwischen einem Hebeldrehpunkt 9, 9' und einem Lagerpunkt 4', 5' angelenkt ist. Zudem kann eine aus jeweils einem Anlenkpunkt 11b, 12b eines Führungsstabes 11, 12 und jeweils einem Lagerpunkt 4', 5' gebildete Ebene parallel zu einer von den Hebeldrehpunkten 9, 9' der Zangeneinheiten 2, 3 gebildeten Ebene angeordnet sein. Die Führungsstäbe 11, 12 bewirken, dass die Aufnahmeteile 4, 5 und entsprechend auch die Aufnahmen 7, 8 immer vertikal ausgerichtet sind und damit radial an der Welle 1 zur Anlage gebracht werden können.

In einer weiteren Ausgestaltung der zangenartigen Einrichtung kann vorgesehen sein, dass jeweils ein Lagerpunkt 4', 5', ein Hebeldrehpunkt 9, 9' und jeweils zwei Anlenkpunkte 11a, 11b, 12a, 12b derart angeordnet sind, dass sie nicht die Eckpunkte eines Parallelogramms bilden. Hierbei ist insbesondere die Länge eines über die Anlenkpunkte 11a, 11b, 12a, 12b festgelegten Führungsstabes 11, 12 ungleich der Länge des ersten Hebelendes 6, 6' einer Zangeneinheit 2, 3, das zwischen einem Hebeldrehpunkt 9, 9' und einem Lagerpunkt 4', 5' angelenkt ist, so dass auch die aus jeweils einem Anlenkpunkt 11b, 12b eines Führungsstabes 11, 12 und einem Lagerpunkt 4', 5' gebildete Ebene nicht parallel zu der von den Hebeldrehpunkten 9, 9' der Zangeneinheiten 2, 3 gebildeten Ebene angeordnet ist. Hierbei ist jeweils eine Zangeneinheit 2, 3 mit dem jeweiligen Führungsstab 11, 12 als viergliedriges Kurbelgetriebe oder Koppelgetriebe ausgebildet, dessen Gelenkpunkte von den jeweiligen Anlenkpunkten 11a, 11b, 12a, 12b, Lagerpunkten 4', 5' und Hebeldrehpunkten 9, 9' gebildet wird.

An den ersten Hebelenden 6, 6' der Zangeneinheiten 2, 3 entgegengesetzten zweiten Hebelenden 13, 13' sind die als Hebel ausgestalteten Zangeneinheiten 2, 3 über einen Hubzylinder 14 miteinander verbunden. Das zweite Hebelende 13, 13' jeder Zangeneinheit 2, 3 kann zu dem ersten Hebelende 6, 6' abgewinkelt sein, um beispielsweise die Befestigung von Hubzylindern unterschiedlicher Größe an den Zangeneinheiten 2, 3 zu ermöglichen. Hierbei ist die obere Zangeneinheit 2 an dem Kolben 15 des Hubzylinders 14 und die untere Zangeneinheit 3 an dem Zylinder 16 des Hubzylinders 14 drehbar befestigt. Der Hubzylinder 14 kann als Pneumatikzylinder oder Hydraulikzylinder ausgestaltet sein. Eine Druckbeaufschlagung des Hubzylinders 14 bewirkt, dass die zweiten Hebelenden 13, 13' der Zangeneinheiten 2, 3 auseinander gedrückt werden und folglich sich der Abstand der Aufnahmen 7, 8 verringert, bis schließlich die Aufnahmen 7, 8 gemeinsam zur Anlage an der Oberfläche 17 der Welle 1 kommen.

Die Zangeneinheiten 2, 3 sind zudem derart ausgelegt, dass eine gleichmäßige Gewichtsverteilung zwischen den ersten Hebelenden 6, 6' und den zweiten Hebelenden 13, 13' erreicht wird, indem beispielsweise die Gewichte der Hebelarme beiderseits der Hebeldrehpunkte 9, 9'ausgeglichen sind. Hierdurch kann auf einen Gewichtsausgleich der Zangeneinheiten 2, 3 durch beispielsweise einen weiteren Pneumatikzylinder verzichtet werden, so dass die technische Komplexität der erfindungsgemäßen Vorrichtung und folglich auch die Herstellung und Montage erheblich vereinfacht wird. Bei Bedarf kann jedoch ein fest an den Zangeneinheiten 2, 3 montiertes Gegengewicht dem Gewichtsausgleich dienen.

Sofern die Aufnahmen 7, 8 als Elektroden ausgestaltet sind und ein Ausgleichsgewicht an der Welle 1 durch Schweißen befestigt werden soll, wird durch die Ausgestaltung der zangenartigen Einrichtung sichergestellt, dass eine Schweißkraft genau radial auf die Welle 1 wirkt. Die Zangeneinheiten 2, 3 sind so ausgelegt, dass die Schweißkraft möglichst ohne Winkelfehler in das aufzubringende Ausgleichsgewicht eingeleitet wird. Ausgleichsgewichte können jedoch ebenfalls durch Kleben an der Welle 1 befestigt werden. Die Aufnahmen 7, 8 für das Ausgleichsgewicht oder die Welle 1 sind von der Form her dem Wellenumfang angepasst und konkav gekrümmt ausgestaltet. Auch die Form der Ausgleichsgewichte ist in der Regel konkav gekrümmt.

Die Zangeneinheiten 2, 3 sind in offene, in einer Ebene mit der Wellenachse 18 liegende Endanschlagspositionen verschiebbar, die in den Figuren 1 und 2 dargestellt sind. In der Endanschlagsposition sind die Aufnahmen 7, 8 der Zangeneinheiten 2, 3 parallel zueinander und in einem gleichen Abstand zur Wellenachse 18 ausgerichtet, wobei der Abstand der Aufnahmen 7, 8 in dieser Position am größten ist. Der Endanschlag bringt die als Hebelarme ausgestalteten Zangeneinheiten 2, 3 in eine Symmetriestellung zur Wellenachse 18. Falls die Aufnahmen 7, 8 oder die Hebelarme aufgrund von Reibung nicht symmetrisch zur Wellenachse 18 ausgerichtet sind, können sie durch die Verschiebung in die Endanschlagsposition wieder in Gleichlage zur Wellenachse gebracht werden.

Die Vorrichtung kann für verschiedene Wellendurchmesser ausgestaltet sein. In den Figuren ist exemplarisch ein Wellenausschnitt mit einem kleineren und einem größeren Wellendurchmesser gezeigt. Die Vorrichtung ist derart ausgestaltet, dass die Zangeneinheiten 2, 3, insbesondere die ersten Hebelenden 6, 6' der Zangeneinheiten 2, 3, parallel zueinander stehen und die Zangeneinheiten 2, 3 horizontal ausgerichtet sind, wenn die Aufnahmen 7, 8 zur Anlage an einen errechneten mittleren Wellendurchmesser kommen. Hierdurch kann die notwendige Bewegung der Zangeneinheiten 2, 3 ausgehend von der geschlossenen, an der Welle 1 anliegenden Position in die Endanschlagsposition möglichst kurz gehalten werden.

Um eine Unwucht einer Welle 1 zu bestimmen und einen Unwuchtausgleich vorzunehmen, wird die auszuwuchtende Welle 1 in nicht näher dargestellten Lagereinrichtungen in der Wellenauswuchtmaschine gelagert und mithilfe eines Antriebs gedreht. Sensoren, wie zum Beispiel Abstandssensoren, erfassen das Drehverhalten der Welle 1 und leiten Messdaten an eine Auswerteeinheit weiter, die dann eine gegebenenfalls vorliegende Unwucht und entsprechend den Ausgleichsort und eine erforderliche Ausgleichsmasse berechnet. Der Ausgleich der Unwucht, das heißt die Anbringung von Ausgleichsgewichten an den Ausgleichsorten, erfolgt mit der erfindungsgemäßen Vorrichtung. Die Vorrichtung kann als separate Einheit in die Auswuchtmaschine integriert sein.

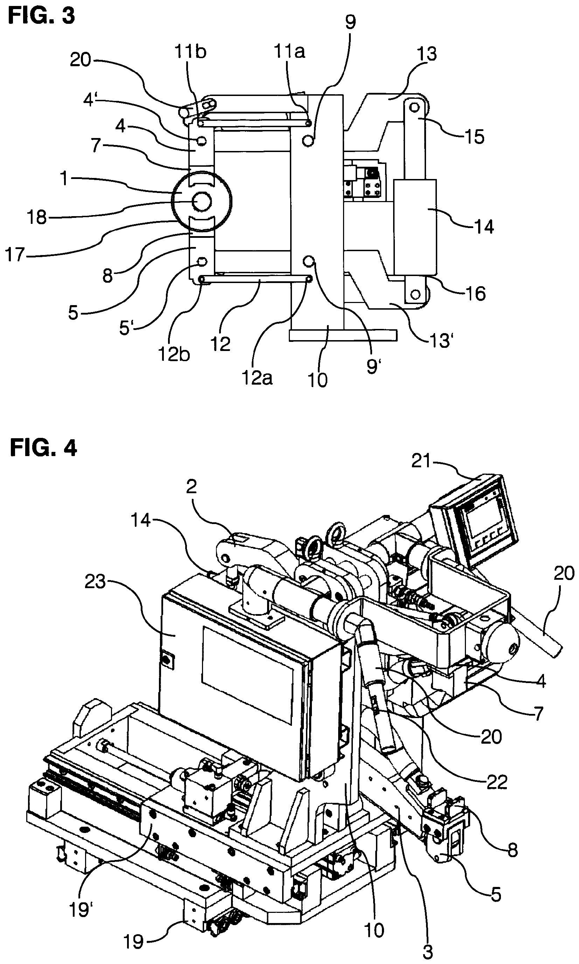

Um die Vorrichtung an den jeweiligen Ausgleichsort verschieben zu können, ist - wie in Figur 4 gezeigt - die Vorrichtung auf einem ersten bewegbaren Führungsschlitten 19 gelagert, so dass die Vorrichtung in Wellenlängsrichtung verschiebbar ist. Der Führungsschlitten 19 kann auf einer längs zur Wellenachse 18 verlaufenden Führungsschiene verschiebbar gelagert sein. Der Führungsschlitten 19 ist an dem Grundkörper 10 der Vorrichtung angebracht. Ferner ist die Vorrichtung quer zur Wellenachse 18 verschiebbar oder verlagerbar, um eine Einlagerung der Welle 1 in die Lagereinrichtung und ihre Entnahme aus dieser zu ermöglichen. Hierfür weist die Vorrichtung einen weiteren Führungsschlitten 19' auf, der quer zu dem ersten Führungsschlitten 19 angeordnet ist und eine Längsverschiebung der Vorrichtung ermöglicht.

Zum Befestigen von einem oder mehreren Ausgleichsgewichten mithilfe der Vorrichtung werden die Zangeneinheiten 2, 3 so beiderseits der Welle 1 angeordnet, dass die Mitten der Aufnahmeteile 4, 5 mit den Aufnahmen 7, 8 für Ausgleichsgewichte in einer Ebene der Wellenachse 18 liegen. Das Ausgleichsgewicht kann beispielsweise in die untere Zangeneinheit 3 beziehungsweise in die entsprechende untere Aufnahme 8 eingebracht werden. Die Einbringung des Ausgleichsgewichts kann manuell oder automatisch erfolgen. Dadurch, dass die Aufnahmen 7, 8 als Wechselteil ausgestaltet sind, können sie zum einen einfach ausgetauscht werden, um für unterschiedliche Wellendurchmesser passend zu sein. Zum anderen können die Aufnahmen 7, 8 hierdurch auch an unterschiedlich ausgestaltete Ausgleichsgewichtsformen angepasst werden.

Durch die Druckbeaufschlagung des Hubzylinders 14 werden dann die Aufnahmen 7, 8 der Zangeneinheiten 2, 3 gemeinsam bis zur Anlage an der Wellenoberfläche 17 bewegt. Das Ausgleichsgewicht in der unteren Aufnahme 8 wird gegen die Wellenoberfläche 17 gepresst und zum Beispiel durch einen Schweißvorgang befestigt, wobei die untere und obere Aufnahme 7, 8 als Elektroden fungieren. Nach der Anbringung werden die Zangeneinheiten 2, 3 in die offene Endanschlagsposition bewegt. Die Vorrichtung kann dann zur nächsten Ausgleichsposition oder -ebene durch Verschiebung der Vorrichtung parallel zur Welle 1 gebracht werden. Sofern alle notwendigen Ausgleichsgewichte an der Welle 1 zur Beseitigung der Unwucht angebracht sind, wird ein Kontrollmesslauf durchgeführt, um den Ausgleich der Unwucht zu kontrollieren. Bei Bedarf können mithilfe der Vorrichtung dann weitere Ausgleichsgewichte an der Welle 1 angebracht werden. Ansonsten kann die Vorrichtung mithilfe des Führungsschlittens 19' verfahren werden, um die Welle 1 zu entnehmen und eine weitere, unwuchtbehaftete Welle in die Ausgleichsmaschine einzulagern.

Die Vorrichtung kann mit einer Griffgarnitur 20 ausgestattet sein, die als Steuervorrichtung zum manuellen Positionieren der Vorrichtung und zur Bedienung der Vorrichtung genutzt werden kann. Ein Bediener kann die Vorrichtung mithilfe der Griffgarnitur 20 zum Ausgleichsort bewegen, wobei die Positionierung luftunterstützt sein kann, um die Verschiebung der Vorrichtung zu vereinfachen. Der Verfahrweg der Vorrichtung kann durch einen manuell setzbaren Endanschlag begrenzt sein. An der Vorrichtung kann ein Bildschirm 21 angeordnet sein, auf dem beispielsweise Informationen zu dem Schweißvorgang angezeigt werden. Sobald die Vorrichtung positioniert ist, kann der Bediener ein oder mehrere notwendige Ausgleichsgewichte in die untere Aufnahme 8 oder gegebenenfalls auf die Welle 1 legen. Der Schweißvorgang kann durch einen Schalter 22 an der Griffgarnitur 20 ausgelöst werden. Die Griffgarnitur 20 ist mit einer Steuereinheit 23 verbunden. Durch Betätigung des Schalters 22 schließen die Zangeneinheiten 2, 3 pneumatisch, schweißen und öffnen nach erfolgter Schweißung. Anschließend kann der Bediener die Vorrichtung entriegeln und gegebenenfalls zum nächsten Ausgleichsort verschieben.

Es versteht sich, dass anstelle der oder zusätzlich zu der dargestellten und beschriebenen Schweißeinrichtung auch andere bekannte Befestigungseinrichtungen, wie Klebeeinrichtungen, eingesetzt werden können.

Es liegt ferner im Rahmen der Erfindung, die Vorrichtung zum Befestigen von Ausgleichsgewichten räumlich von der Auswuchtmaschine zu trennen, falls sich dies beispielsweise für eine Fertigungslinie als günstig herausstellen sollte. Die Welle wird dann von der Auswuchtmaschine in die Vorrichtung umgelagert, wobei Informationen über die ermittelte Unwucht beziehungsweise daraus resultierende Ausgleichsdaten weitergegeben werden.

## Patentansprüche

1. Vorrichtung für eine Wellenauswuchtmaschine zum Befestigen eines Ausgleichsgewichts an einer Welle (1) mit einer eine obere und eine untere Zangeneinheit (2, 3) umfassenden zangenartigen Einrichtung, **dadurch gekennzeichnet, dass** jede Zangeneinheit (2, 3) als zweiarmiger Hebel ausgestaltet ist, der an einem Grundkörper (10) um einen Hebeldrehpunkt (9, 9') drehbar gelagert ist und jede Zangeneinheit (2, 3) an einem ersten Hebelende (6, 6') ein Aufnahmeteil (4, 5) mit mindestens einer Aufnahme (7, 8) für ein Ausgleichsgewicht oder eine Welle aufweist, wobei die Hebel an ihren den Aufnahmen (7, 8) entgegengesetzten zweiten Hebelenden (13, 13') über einen Hubzylinder (14) miteinander verbunden sind und jeweils ein Führungsstab (11, 12) an dem Aufnahmeteil (4, 5) jeder Zangeneinheit (2, 3) und dem Grundkörper (10) angelenkt ist, so dass die Aufnahmen (7, 8) durch einen Hub des Hubzylinders (14) zur radialen Anlage an der Welle (1) bringbar sind, wobei der zweiarmige Hebel jeder Zangeneinheit (2, 3) derart ausgestaltet ist, dass die Gewichte der zwei Hebelarme beiderseits der Hebeldrehpunkte (9, 9') ausgeglichen sind, so dass eine gleichmäßige Gewichtsverteilung zwischen den ersten Hebelenden (6, 6') und den zweiten Hebelenden (13, 13') erreicht wird.

2. Vorrichtung nach Anspruch 1, **dadurch gekennzeichnet, dass** ein oberes Aufnahmeteil (4) über einen Lagerpunkt (4') an der oberen Zangeneinheit (2) und ein unteres Aufnahmeteil (5) über einen Lagerpunkt (5') an der unteren Zangeneinheit (3) beweglich gelagert ist.

3. Vorrichtung nach Anspruch 1 oder 2, **dadurch gekennzeichnet, dass** jeder Führungsstab (11, 12) mit einem ersten Ende über einen Anlenkpunkt (11a, 12a) an dem Grundkörper (10) und mit einem zweiten Ende über einen Anlenkpunkt (11b, 12b) an dem Aufnahmeteil (4, 5) einer Zangeneinheit (2, 3) angelenkt ist.

4. Vorrichtung nach Anspruch 3, **dadurch gekennzeichnet, dass** jeweils ein Lagerpunkt (4', 5'), ein Hebeldrehpunkt (9, 9') und jeweils zwei Anlenkpunkte (11, 12) derart angeordnet sind, dass sie die Eckpunkte eines Parallelogramms bilden.

5. Vorrichtung nach Anspruch 3, **dadurch gekennzeichnet, dass** jeweils eine Zangeneinheit (2, 3) mit dem jeweiligen Führungsstab (11, 12) als viergliedriges Kurbelgetriebe ausgebildet ist, dessen Gelenkpunkte von den jeweiligen Anlenkpunkten (11a, 11b, 12a, 12b), Lagerpunkten (4', 5') und Hebeldrehpunkten (9, 9') gebildet wird.

6. Vorrichtung nach einem der vorhergehenden Ansprüche, **dadurch gekennzeichnet, dass** die Zangeneinheiten (2, 3) in offene in einer Ebene mit einer Wellenachse (18) liegenden Endanschlagspositionen verschiebbar sind.

7. Vorrichtung nach Anspruch 6, **dadurch gekennzeichnet, dass** die Aufnahmen (7, 8) der Zangeneinheiten (2, 3) in der Endanschlagsposition parallel und in einem gleichen Abstand zur Wellenachse (18) vorliegen.

8. Vorrichtung nach einem der vorhergehenden Ansprüche, **dadurch gekennzeichnet, dass** die Aufnahme (7, 8) für das Ausgleichsgewicht oder die Welle (1) konkav gekrümmt ausgestaltet ist.

9. Vorrichtung nach einem der vorhergehenden Ansprüche, **dadurch gekennzeichnet, dass** das Aufnahmeteil (4, 5) mehrere Aufnahmen (7, 8) für Ausgleichsgewichte umfasst.

10. Vorrichtung nach einem der vorhergehenden Ansprüche, **dadurch gekennzeichnet, dass** die Aufnahmen (7, 8) auswechselbar an den Aufnahmeteilen (4, 5) befestigt sind.

11. Vorrichtung nach einem der vorhergehenden Ansprüche, **dadurch gekennzeichnet, dass** der Grundköper (10) einen ersten Führungsschlitten (19) umfasst, so dass die Vorrichtung in Wellenlängsrichtung verschiebbar ist.

12. Vorrichtung nach einem der vorhergehenden Ansprüche, **dadurch gekennzeichnet, dass** der Grundkörper (10) einen weiteren Führungsschlitten (19') umfasst, so dass die Vorrichtung quer zur Wellenachse verschiebbar ist.

13. Vorrichtung nach einem der vorhergehenden Ansprüche, **dadurch gekennzeichnet, dass** die zangenartige Einrichtung als Schweißvorrichtung und die Aufnahmen (7, 8) als Elektroden ausgebildet sind.

## Claims

1. A device for a shaft balancing machine for the attachment of a correction weight to a shaft (1), with a clamp-type arrangement comprising an upper and a lower clamping unit (2, 3), **characterized in that** each clamping unit (2, 3) is configured as a two-armed lever mounted on a main body (10) for rotation about a fulcrum (9, 9'), and each clamping unit (2, 3) includes on a first lever end (6, 6') a holding fixture (4, 5) having at least one holder (7, 8) for accommodating a correction weight or a shaft, said levers being connected to each other on their second lever ends (13, 13') opposite the holders (7, 8) through an actuating cylinder (14), and the holding fixture (4, 5) of each clamping unit (2, 3) and the main body (10) having pivotally mounted on them a respective guide rod (11, 12) enabling the holders (7, 8) to be moved into radial abutment with the shaft (1) by a stroke of the actuating cylinder (14), wherein the two-armed lever of each clamping unit (2, 3) is configured in such a way that the weights of the two lever arms on either side of the fulcrums (9, 9') are balanced out, thereby accomplishing a uniform weight distribution between the first lever ends (6, 6') and the second lever ends (13, 13').

2. The device according to claim 1, **characterized in that** an upper holding fixture (4) is movably mounted on the upper clamping unit (2) through a bearing point (4'), and a lower holding fixture (5) is movably mounted on the lower clamping unit (3) through a bearing point (5').

3. The device according to claim 1 or 2, **characterized in that** each guide rod (11, 12) has a first end pivotally mounted on the main body (10) through a pivot point (11a, 12a) and a second end pivotally mounted on the holding fixture (4, 5) of a clamping (2, 3) unit through a pivot point (11b, 12b).

4. The device according to claim 3, **characterized in that** one bearing point (4', 5') each, one fulcrum (9, 9') and each two pivot points (11, 12) are arranged such as to form the corner points of a parallelogram.

5. The device according to claim 3, **characterized in that** one clamping unit (2, 3) each with the respective guide rod (11, 12) is configured as a four-bar crank mechanism the joints of which are formed by the respective pivot points (11a, 11b, 12a, 12b), bearing points (4', 5') and fulcrums (9, 9').

6. The device according to any one of the preceding claims, **characterized in that** the clamping units (2, 3) are displaceable into open limit stop positions lying in a plane with a shaft axis (18).

7. The device according to claim 6, **characterized in that** in the limit stop position the holders (7, 8) of the clamping units (2, 3) are parallel and equidistant to the shaft axis (18).

8. The device according to any one of the preceding claims, **characterized in that** the holder (7, 8) for the correction weight or for the shaft (1) is configured to exhibit a concave curvature.

9. The device according to any one of the preceding claims, **characterized in that** the holding fixture (4, 5) comprises several holders (7, 8) for correction weights.

10. The device according to any one of the preceding claims, **characterized in that** the holders (7, 8) are exchangeably fastened to the holding fixtures (4, 5).

11. The device according to any one of the preceding claims, **characterized in that** the main body (10) comprises a first guide slide (19) enabling the device to be slidable in the shaft longitudinal direction.

12. The device according to any one of the preceding claims, **characterized in that** the main body (10) comprises a further guide slide (19') enabling the device to be displaceable in a direction transverse to the shaft axis.

13. The device according to any one of the preceding claims, **characterized in that** the clamp-type arrangement is configured as a welding device and the holders (7, 8) as electrodes.

## Revendications

1. Dispositif pour une machine d'équilibrage d'arbre permettant de fixer un poids d'équilibrage sur un arbre (1), présentant un dispositif de type pince comprenant une unité de pince supérieure et une unité de pince inférieure (2, 3), **caractérisé en ce que** chaque unité de pince (2, 3) est conçue comme un levier à deux bras monté rotatif sur un corps de base (10) autour d'un point de pivotement de levier (9, 9'), et chaque unité de pince (2, 3) est munie, à une première extrémité de levier (6, 6'), d'une pièce de réception (4, 5) avec au moins un logement (7, 8) pour un poids d'équilibrage ou pour un arbre, les leviers étant reliés ensemble, à leurs deuxièmes extrémités de levier (13, 13') opposées aux logements (7, 8), par l'intermédiaire d'un vérin de levage (14), et une tige de guidage (11, 12) étant articulée respectivement sur la pièce de réception (4, 5) de chaque unité de pince (2, 3) et sur le corps de base (10), de sorte que les logements (7, 8) peuvent être mis en appui radial contre l'arbre (1) par une course du vérin de levage (14), le levier à deux bras de chaque unité de pinces (2, 3) étant configuré de telle sorte que les poids des deux bras de levier sont équilibrés des deux côtés des points de pivotement de levier (9, 9') de manière à obtenir une répartition uniforme du poids entre les premières extrémités de levier (6, 6') et les deuxièmes extrémités du levier (13, 13').

2. Dispositif selon la revendication 1, **caractérisé en ce qu'**une pièce de réception supérieure (4) est montée mobile sur l'unité de pince supérieure (2) via un point de palier (4'), et une pièce de réception inférieure (5) est montée mobile sur l'unité de pince inférieure (3) via un point de palier (5').

3. Dispositif selon la revendication 1 ou 2, **caractérisé en ce que** chaque tige de guidage (11, 12) est articulée par une première extrémité au corps de base (10) via un point d'articulation (11a, 12a) et par une deuxième extrémité à la pièce de réception (4, 5) d'une unité de pinces (2, 3) via un point d'articulation (11b, 12b).

4. Dispositif selon la revendication 3, **caractérisé en ce que** respectivement un point de palier (4', 5'), un point de pivotement de levier (9, 9') et respectivement deux points d'articulation (11, 12) sont disposés de manière à former les angles d'un parallélogramme.

5. Dispositif selon la revendication 3, **caractérisé en ce qu'**une unité de pinces (2, 3) avec la tige de guidage respective (11, 12) est conçue sous la forme d'un mécanisme à manivelle à quatre éléments dont les points de pivotement sont formés par les points de pivotement respectifs (11a, 11b, 12a, 12b), les points de palier (4', 5') et les points de pivotement de levier (9, 9').

6. Dispositif selon l'une des revendications précédentes, **caractérisé en ce que** les unités de pince (2, 3) peuvent être déplacées dans des positions de butée de fin de course ouvertes situées dans un plan avec un axe d'arbre (18).

7. Dispositif selon la revendication 6, **caractérisé en ce que** les logements (7, 8) des unités de pince (2, 3), dans la position de butée de fin de course, sont parallèles et à égale distance de l'axe de l'arbre (18).

8. Dispositif selon l'une des revendications précédentes, **caractérisé en ce que** le logement (7, 8) pour le poids d'équilibrage ou l'arbre (1) est conçu courbé de manière concave.

9. Dispositif selon l'une des revendications précédentes, **caractérisé en ce que** la partie de réception (4, 5) comprend plusieurs logements (7, 8) pour poids d'équilibrage.

10. Dispositif selon l'une des revendications précédentes, **caractérisé en ce que** les logements (7, 8) sont fixés de manière interchangeable sur les parties de réception (4, 5).

11. Dispositif selon l'une des revendications précédentes, **caractérisé en ce que** le corps de base (10) comprend un premier chariot de guidage (19) de sorte que le dispositif peut être déplacé dans la direction longitudinale de l'arbre.

12. Dispositif selon l'une des revendications précédentes, **caractérisé en ce que** le corps de base (10) comprend un autre chariot de guidage (19') de sorte que le dispositif peut être déplacé transversalement à l'axe de l'arbre.

13. Dispositif selon l'une des revendications précédentes, **caractérisé en ce que** le dispositif de type pince est conçu comme un dispositif de soudage et les logements (7, 8) sont conçus comme des électrodes.
